# EUROPEAN PATENT APPLICATION

(11) **EP 4 339 041 A1**
(43) Date of publication of application: **20.03.2024**
(21) Application number: 22807428.2
(22) Date of filing: 09.05.2022
(51) Int. Cl.: B60R 21/264

(54) **GAS GENERATOR**

(30) Priority: 13.05.2021 JP 2021081849
(71) Applicant: Nippon Kayaku Kabushiki Kaisha, Tokyo 100-0005 (JP)
(72) Inventor: INOUE, Takuya, Himeji-shi, Hyogo 679-2123 (JP); SHIKAURA, Kenji, Himeji-shi, Hyogo 679-2123 (JP); IWAI, Yoshitaka, Himeji-shi, Hyogo 679-2123 (JP); ARAKI, Yasuhiro, Himeji-shi, Hyogo 679-2123 (JP)
(74) Representative: TBK
(86) International application number: PCT/JP2022/019645
(87) International publication number: WO 2022/239727

(57) **Abstract**

A gas generator (1A) includes a housing, a gas generating agent (61), and a filter (90). The filter (90) is in a hollow cylindrical shape that surrounds a combustion chamber (60) where the gas generating agent (61) is accommodated. The filter (90) is made of a wound body or a braided body of metal wire rods, and held by the housing in an axially compressed state by being sandwiched between a top plate portion (21) and a bottom plate portion (11) of the housing. When sandwiching is removed to apply no load, the filter (90) has an axial length expanded by at least 1 mm as compared with a state in which the filter is sandwiched between the top plate portion (21) and the bottom plate portion (11).

## Description

### TECHNICAL FIELD

The present invention relates to a gas generator incorporated in a passenger protection apparatus which protects a driver and/or a passenger at the time of collision of a vehicle or the like, and particularly to a gas generator incorporated in an air bag apparatus equipped in a car.

### BACKGROUND ART

From a point of view of protection of a driver and/or a passenger in a car, an air bag apparatus which is a passenger protection apparatus has conventionally widely been used. The air bag apparatus is equipped for the purpose of protecting a driver and/or a passenger against shock caused at the time of collision of a vehicle, and it receives a body of a driver or a passenger with an air bag serving as a cushion, as the air bag is expanded and developed instantaneously at the time of collision of the vehicle.

The gas generator is equipment which is incorporated in this air bag apparatus, an igniter therein being ignited in response to power feed through a control unit at the time of collision of a vehicle to thereby burn a gas generating agent with flame caused by the igniter and instantaneously generate a large amount of gas, and thus expands and develops an air bag.

Gas generators of various structures are available. What is called a disc-type gas generator is available as a gas generator suitably used for an air bag apparatus on a driver's seat side equipped in particular in a steering wheel or the like of a car. The disc-type gas generator includes a housing in a short cylindrical shape having axial opposing ends closed. In the disc-type gas generator, gas discharge openings are provided in a circumferential wall portion of the housing, and a gas generating agent, an igniter, and the like are accommodated in the inside of the housing.

In the disc-type gas generator, a filter is generally arranged in the inside of the housing to surround a combustion chamber where a gas generating agent is accommodated. The filter is various in construction. For example, Japanese Patent Laying-Open No. 2014-237389 (PTL 1) discloses, as one of such filters, a filter made from a hollow cylindrical member made of a wound body or a braided body of metal wire rods.

### CITATION LIST

### PATENT LITERATURE

PTL 1: Japanese Patent Laying-Open No. 2014-237389

### SUMMARY OF INVENTION

### TECHNICAL PROBLEM

The filter described above is generally assembled to the housing by being sandwiched in an axial direction between a top plate portion and a bottom plate portion of the housing. Such an assembly structure is suitable from a point of view of stable fixing of the filter to the housing. When that assembly structure is adopted, axial end surfaces of the filter are in pressure contact with the top plate portion and the bottom plate portion of the housing at a moderate pressure.

In the disc-type gas generator, generation of a large amount of gas at the time of activation thereof increases an internal pressure in the housing, and accordingly, the housing deforms to expand outward. When no measures are taken at that time, a gap is created between the housing and the filter, which leads to possibility of leakage of gas through the gap without passage of gas through the filter. Occurrence of such leakage of gas causes insufficient collection of residue (slug) contained in gas or insufficient cooling of gas.

In the disc-type gas generator disclosed in the publication, a leakage prevention member is arranged in a combustion chamber to cover a boundary portion between the housing and the filter. As the leakage prevention member covers the above-described gap, leakage of gas at the time of activation is prevented. In order to prevent leakage of gas with this leakage prevention member, a portion of the leakage prevention member that covers an inner circumferential surface at an axial end of the filter should sufficiently be large along the axial direction of the filter.

When the leakage prevention member as described above is employed, however, an appropriate portion of the inner circumferential surface of the filter is covered with the leakage prevention member. Therefore, gas is less likely to pass through, in particular, the axial ends of the filter, which is a cause of significant lowering in efficiency in use of the filter.

Therefore, the present invention was made to solve the problem described above, and an object thereof is to provide a gas generator in which gas generated in a combustion chamber can reliably pass through a filter and efficiency in use of the filter is hence enhanced.

### SOLUTION TO PROBLEM

A gas generator based on the present invention includes a housing, a gas generating agent, an igniter, and a filter. The housing includes a circumferential wall portion, a top plate portion, and a bottom plate portion. One axial end of the circumferential wall portion is closed by the top plate portion, and the other axial end of the circumferential wall portion is closed by the bottom plate portion. The gas generating agent generates gas by being burnt, and is arranged in the inside of the housing. The igniter burns the gas generating agent and is assembled to the housing. The filter is disposed in the inside of the housing and is in a hollow cylindrical shape that surrounds, in a radial direction of the circumferential wall portion, a combustion chamber where the gas generating agent is accommodated. The circumferential wall portion is provided with a gas discharge opening for discharge of gas generated in the combustion chamber to the outside. The filter is made of a wound body or a braided body of metal wire rods. The filter is held by the housing in an axially compressed state by being sandwiched between the top plate portion and the bottom plate portion. When sandwiching between the top plate portion and the bottom plate portion is removed to apply no load, the filter has an axial length expanded by at least 1.0 mm as compared with a state in which the filter is sandwiched between the top plate portion and the bottom plate portion.

In the gas generator based on the present invention, preferably, an amount of gas generated by combustion of the gas generating agent is not less than 1.0 mol and not more than 3.0 mol.

The gas generator based on the present invention preferably further includes a lower supporting member that covers a boundary portion between the top plate portion and the filter by abutting on a part of the top plate portion that defines the combustion chamber and an end of an inner circumferential surface of the filter on a side of the top plate portion and an upper supporting member that covers a boundary portion between the bottom plate portion and the filter by abutting on a part of the bottom plate portion that defines the combustion chamber and an end of the inner circumferential surface of the filter on a side of the bottom plate portion.

### ADVANTAGEOUS EFFECTS OF INVENTION

According to the present invention, a gas generator in which gas generated in a combustion chamber can reliably pass through a filter and efficiency in use of the filter is hence enhanced can be provided.

### BRIEF DESCRIPTION OF DRAWINGS

Fig. 1 is a schematic diagram of a disc-type gas generator according to a first embodiment.
Fig. 2 is a schematic diagram showing a state at the time of activation, of the disc-type gas generator shown in Fig. 1.
Fig. 3 is a schematic diagram for illustrating a first verification test.
Fig. 4 is a schematic diagram showing a test procedure in a second verification test.
Fig. 5 shows a graph of a result in the second verification test.
Fig. 6 shows a graph of a result in the second verification test.
Fig. 7 shows a graph and a table of the result in the second verification test.
Fig. 8 shows a graph and a table of the result in the second verification test.
Fig. 9 is a schematic diagram of assumed states at the time of activation of disc-type gas generators provided with filters according to Example 1 and Comparative Example 1, respectively.
Fig. 10 is a schematic diagram of a disc-type gas generator according to a second embodiment.

### DESCRIPTION OF EMBODIMENTS

An embodiment of the present invention will be described hereinafter in detail with reference to the drawings. An embodiment shown below represents application of the present invention to a disc-type gas generator suitably incorporated in an air bag apparatus equipped in a steering wheel or the like of a car. The same or common elements in the embodiment shown below have the same reference characters allotted in the drawings and description thereof will not be repeated.

### (First Embodiment)

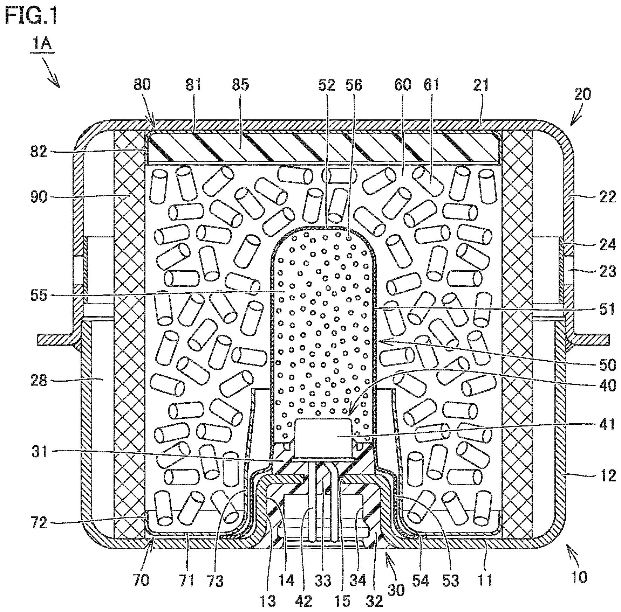

Fig. 1 is a schematic diagram of a disc-type gas generator according to a first embodiment. A construction of a disc-type gas generator 1A according to the present embodiment will initially be described with reference to Fig. 1.

As shown in Fig. 1, disc-type gas generator 1A according to the present embodiment has a short substantially cylindrical housing having axial one and the other ends closed, and is constructed to accommodate as internal construction components in an accommodation space provided in the housing, a holding portion 30, an igniter 40, a cup-shaped member 50, an enhancer agent 56, a gas generating agent 61, a lower supporting member 70, an upper supporting member 80, a cushion material 85, a filter 90, and the like. In the accommodation space provided in the housing, a combustion chamber 60 mainly accommodating gas generating agent 61 among the internal construction components described above is located.

The housing includes a lower shell 10 and an upper shell 20. Each of lower shell 10 and upper shell 20 is made, for example, of a press-formed product formed by press-working a plate-shaped member made of a rolled metal. A metal plate composed, for example, of stainless steel, iron steel, an aluminum alloy, a stainless alloy, or the like is made use of as the plate-shaped member made of metal which forms lower shell 10 and upper shell 20, and what is called a high tensile steel plate which is free from such a failure as fracture even at the time of application of tensile stress not lower than 440 MPa and not higher than 780 MPa is suitably made use of.

Lower shell 10 and upper shell 20 are each formed in a substantially cylindrical shape with bottom, and the housing is constructed by combining and joining the shells such that open surfaces thereof face each other. Lower shell 10 has a bottom plate portion 11 and a cylindrical portion 12 and upper shell 20 has a top plate portion 21 and a cylindrical portion 22.

Cylindrical portion 12 of lower shell 10 has an upper end press-fitted as being inserted in a lower end of cylindrical portion 22 of upper shell 20. Cylindrical portion 12 of lower shell 10 and cylindrical portion 22 of upper shell 20 are joined at a portion of abutment therebetween or in the vicinity thereof so that lower shell 10 and upper shell 20 are fixed. Electron-beam welding, laser welding, friction welding, or the like can suitably be made use of for joining lower shell 10 and upper shell 20 to each other.

A portion of a circumferential wall portion of the housing close to bottom plate portion 11 is thus formed by cylindrical portion 12 of lower shell 10, and a portion of the circumferential wall portion of the housing close to top plate portion 21 is formed by cylindrical portion 22 of upper shell 20. One and the other axial ends of the housing are closed by bottom plate portion 11 of lower shell 10 and top plate portion 21 of upper shell 20, respectively.

A protruding cylindrical portion 13 protruding toward top plate portion 21 is provided in a central portion of bottom plate portion 11 of lower shell 10, so that a depression portion 14 is formed in the central portion of bottom plate portion 11 of lower shell 10. Protruding cylindrical portion 13 is a site to which igniter 40 is fixed with holding portion 30 being interposed, and depression portion 14 is a site serving as a space for providing a female connector portion 34 in holding portion 30.

Protruding cylindrical portion 13 is formed to be in a substantially cylindrical shape with bottom, and an opening 15 is provided at an axial end portion located on a side of top plate portion 21. Opening 15 is a site through which a pair of terminal pins 42 of igniter 40 passes.

Igniter 40 serves to produce flames and includes an ignition portion 41 and a pair of terminal pins 42 described above. Ignition portion 41 contains an ignition agent producing flames by being ignited to burn at the time of activation and a resistor for igniting this ignition agent. The pair of terminal pins 42 is connected to ignition portion 41 for igniting the ignition agent.

More specifically, ignition portion 41 includes a squib cup formed like a cup and a plug closing an opening end of the squib cup and holding a pair of terminal pins 42 as being inserted therein. In igniter 40, the resistor (bridge wire) is attached to couple tip ends of the pair of terminal pins 42 inserted in the squib cup, and the ignition agent is loaded in the squib cup so as to surround the resistor or to be in proximity to the resistor.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. The squib cup and the plug described above are generally made of a metal or plastic.

Upon sensing collision, a prescribed amount of current flows in the resistor through terminal pin 42. As the prescribed amount of current flows in the resistor, Joule heat is generated in the resistor and the ignition agent starts burning. Flame at a high temperature caused by being burnt bursts the squib cup accommodating the ignition agent. A time period from flow of a current in the resistor until activation of igniter 40 is generally not longer than 2.0 milliseconds in a case that the Nichrome wire is employed as the resistor.

Igniter 40 is attached to bottom plate portion 11 in such a manner that terminal pin 42 is introduced from the inside of lower shell 10 to pass through opening 15 provided in protruding cylindrical portion 13. Specifically, holding portion 30 formed from a resin molded portion is provided around protruding cylindrical portion 13 provided in bottom plate portion 11, and igniter 40 is fixed to bottom plate portion 11 as being held by holding portion 30.

Holding portion 30 is formed through injection molding (more specifically, insert molding) with the use of a mold, and formed by attaching an insulating fluid resin material to bottom plate portion 11 so as to reach a part of an outer surface from a part of an inner surface of bottom plate portion 11 through opening 15 provided in bottom plate portion 11 of lower shell 10 and solidifying the fluid resin material.

For a source material for holding portion 30 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 30 after molding, glass fibers or the like are preferably contained as fillers in these resin materials. In a case where sufficient mechanical strength can be ensured only by a thermoplastic resin, however, a filler as described above does not have to be added.

Holding portion 30 has an inner cover portion 31 covering a part of an inner surface of bottom plate portion 11 of lower shell 10, an outer cover portion 32 covering a part of an outer surface of bottom plate portion 11 of lower shell 10, and a coupling portion 33 located within opening 15 provided in bottom plate portion 11 of lower shell 10 and continuing to each of inner cover portion 31 and outer cover portion 32.

Holding portion 30 is secured to bottom plate portion 11 at a surface on a side of bottom plate portion 11, of each of inner cover portion 31, outer cover portion 32, and coupling portion 33. Holding portion 30 is secured at each of a side surface and a lower surface of igniter 40 which is closer to a lower end of ignition portion 41, as well as a surface of a portion of igniter 40 which is closer to an upper end of terminal pin 42.

Thus, opening 15 is completely buried by terminal pin 42 and holding portion 30, so that hermeticity of the space in the housing is ensured by sealability ensured in that portion.

In a portion of outer cover portion 32 of holding portion 30, which faces the outside, female connector portion 34 is formed. This female connector portion 34 is a site for receiving a male connector (not shown) of a harness for connecting igniter 40 and a control unit (not shown) to each other, and it is located in depression portion 14 provided in bottom plate portion 11 of lower shell 10.

In this female connector portion 34, a portion of igniter 40 closer to the lower end of terminal pin 42 is arranged as being exposed. The male connector is inserted in female connector portion 34, so that electrical conduction between a core wire of the harness and terminal pin 42 is established.

Injection molding described above may be carried out with the use of lower shell 10 obtained by providing an adhesive layer in advance at a prescribed position on a surface of bottom plate portion 11 in a portion to be covered with holding portion 30. The adhesive layer can be formed by applying an adhesive in advance to a prescribed position of bottom plate portion 11 and curing the adhesive. For the adhesive applied in advance to bottom plate portion 11, an adhesive containing as a source material, a resin material excellent in heat resistance, durability, corrosion resistance, and the like after curing is suitably made use of, and for example, an adhesive containing a cyanoacrylate-based resin or a silicone-based resin as a source material is particularly suitably made use of.

By doing so, the cured adhesive layer is located between bottom plate portion 11 and holding portion 30, so that holding portion 30 formed from a resin molded portion can more firmly be secured to bottom plate portion 11. Therefore, by providing the adhesive layer annularly along a circumferential direction so as to surround opening 15 provided in bottom plate portion 11, higher sealability can be ensured in that portion.

Though such a construction example that igniter 40 can be fixed to lower shell 10 by injection molding holding portion 30 formed from the resin molded portion is exemplified, other alternative means can also be used for fixing igniter 40 to lower shell 10.

Cup-shaped member 50 is assembled to bottom plate portion 11 so as to cover protruding cylindrical portion 13, holding portion 30, and igniter 40. Cup-shaped member 50 has a substantially cylindrical shape with bottom having an open end portion on the side of bottom plate portion 11, and contains an enhancer chamber 55 accommodating enhancer agent 56. Cup-shaped member 50 is arranged to protrude into combustion chamber 60 accommodating gas generating agent 61, such that enhancer chamber 55 provided therein faces ignition portion 41 of igniter 40.

Cup-shaped member 50 has a cylindrical sidewall portion 51 which defines enhancer chamber 55 described above, a top wall portion 52 which defines enhancer chamber 55 and closes an axial end portion of sidewall portion 51 located on the side of top plate portion 21, and an extension portion 53 provided to extend radially outward from a portion of sidewall portion 51 on a side of an open end. Extension portion 53 is formed to extend along an inner surface of bottom plate portion 11 of lower shell 10. Specifically, extension portion 53 is in a shape curved along a shape of an inner bottom surface of bottom plate portion 11 in a portion where protruding cylindrical portion 13 is provided and in the vicinity thereof and includes a tip end portion 54 extending like a flange in a radially outer portion thereof.

Tip end portion 54 in extension portion 53 is arranged between bottom plate portion 11 and lower supporting member 70 along the axial direction of the housing and sandwiched between bottom plate portion 11 and lower supporting member 70 along the axial direction of the housing. Since lower supporting member 70 is pressed toward bottom plate portion 11 by gas generating agent 61, cushion material 85, upper supporting member 80, and top plate portion 21 arranged above, cup-shaped member 50 is in such a state that tip end portion 54 of extension portion 53 is pressed toward bottom plate portion 11 by lower supporting member 70 and fixed to bottom plate portion 11. Thus, cup-shaped member 50 is prevented from falling from bottom plate portion 11 without using swaging or press-fitting for fixing cup-shaped member 50.

Cup-shaped member 50 has an opening in neither of sidewall portion 51 and top wall portion 52 and surrounds enhancer chamber 55 provided therein. This cup-shaped member 50 bursts or melts with increase in pressure in enhancer chamber 55 or conduction of heat generated therein when enhancer agent 56 is ignited as a result of activation of igniter 40, and mechanical strength thereof is relatively low.

Therefore, a member made of metal such as aluminum or an aluminum alloy or a member made of a resin such as a thermosetting resin represented by an epoxy resin and the like and a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like is suitably made use of for cup-shaped member 50.

A method of fixing cup-shaped member 50 is not limited to a fixing method using lower supporting member 70 described above, and other fixing methods may be made use of.

Enhancer agent 56 charged into enhancer chamber 55 generates thermal particles as it is ignited to burn by flames produced as a result of activation of igniter 40. Enhancer agent 56 should be able to reliably start burning gas generating agent 61, and generally, a composition composed of metal powders/oxidizing agent represented by B/KNO₃, B/NaNO₃, or Sr(NO₃)₂, a composition composed of titanium hydride/potassium perchlorate, or a composition composed of B/5-aminotetrazole/potassium nitrate/molybdenum trioxide is employed.

For enhancer agent 56, a powdery enhancer agent, an enhancer agent formed in a prescribed shape by a binder, or the like is made use of. A shape of enhancer agent 56 formed by a binder includes, for example, various shapes such as a granule, a column, a sheet, a sphere, a cylinder with a single hole, a cylinder with multiple holes, a tablet, and the like.

In a space surrounding a portion where cup-shaped member 50 described above is arranged in a space inside the housing, combustion chamber 60 accommodating gas generating agent 61 is located. Specifically, as described above, cup-shaped member 50 is arranged to protrude into combustion chamber 60 formed in the housing, and a space provided in a portion of this cup-shaped member 50 facing the outer surface of sidewall portion 51 and a space provided in a portion thereof facing an outer surface of top wall portion 52 are provided as combustion chamber 60.

In a space surrounding combustion chamber 60 accommodating gas generating agent 61 in a radial direction of the housing, filter 90 is arranged along an inner circumference of the housing. Filter 90 is held by the housing in an axially compressed state by being sandwiched between top plate portion 21 and bottom plate portion 11 of the housing. Filter 90 has a hollow cylindrical shape and is arranged such that a central axis thereof substantially matches with the axial direction of the housing.

Gas generating agent 61 is an agent which is ignited by thermal particles generated as a result of activation of igniter 40 and produces gas as it burns. A non-azide-based gas generating agent is preferably employed as gas generating agent 61, and gas generating agent 61 is formed as a molding generally containing a fuel, an oxidizing agent, and an additive.

For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of.

As the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of.

As the additive, a binder, a slag formation agent, a combustion modifier, or the like is exemplified. As the binder, for example, an organic binder such as polyvinyl alcohol, metal salt of carboxymethyl cellulose, and stearate, or an inorganic binder such as synthetic hydrotalcite and Japanese acid clay can suitably be made use of. In addition, as the binder, polysaccharide derivatives such as hydroxyethyl cellulose, hydroxypropyl methylcellulose, cellulose acetate, cellulose propionate, cellulose acetate butyrate, nitrocellulose, microcrystalline cellulose, guar gum, polyvinyl pyrrolidone, polyacrylamide, and starch and inorganic binders such as molybdenum disulfide, talc, bentonite, diatomite, kaolin, and alumina can also suitably be made use of. As the slag formation agent, silicon nitride, silica, Japanese acid clay, or the like can suitably be made use of. As the combustion modifier, a metal oxide, ferrosilicon, activated carbon, graphite, or the like can suitably be made use of.

A shape of a molding of gas generating agent 61 includes various shapes such as a particulate shape including a granule, a pellet, and a column, and a disc shape. In addition, among columnar moldings, a molding with holes having through holes in the molding (such as a cylindrical shape with a single hole or a cylindrical shape with multiple holes) is also made use of. These shapes are preferably selected as appropriate depending on specifications of an air bag apparatus in which disc-type gas generator 1A is incorporated, and for example, a shape optimal for the specifications is preferably selected by selecting a shape allowing change over time of a rate of generation of gas during burning of gas generating agent 61. Furthermore, in addition to a shape of gas generating agent 61, a size of a molding or an amount thereof for filling is preferably selected as appropriate, in consideration of a linear burning velocity, a pressure exponent, or the like of gas generating agent 61.

Filter 90 is made of a wound body or a braided body of metal wire rods. For example, a filter obtained by winding a metal wire rod of stainless steel or iron steel, a filter formed by press-working a mesh material into which metal wire rods are knitted to thereby pack the same, or the like can be made use of. As the mesh material, specifically, a wire gauze of stocking stitch, a plain-woven wire gauze, an aggregate of crimped metal wire rods, or the like can be made use of.

Filter 90 functions as cooling means for cooling gas by removing heat at a high temperature of gas when gas produced in combustion chamber 60 passes through this filter 90 and also functions as removal means for removing residues (slug) or the like contained in gas. Therefore, in order to sufficiently cool gas and to prevent emission of residues to the outside, gas generated in combustion chamber 60 should reliably pass through filter 90.

In disc-type gas generator 1A according to the present embodiment, a filter relatively largely elastically deformable along the axial direction is employed as filter 90. Therefore, filter 90 has high resilience which is ability to greatly expand along the axial direction when the filter is unloaded from the state compressed along the axial direction. By employing such filter 90, gas generated in the combustion chamber can reliably pass through filter 90 and efficiency in use of filter 90 can be enhanced, which will be described later.

Filter 90 is arranged to be distant from cylindrical portions 12 and 22 so as to provide a gap 28 of a prescribed size between cylindrical portion 12 of lower shell 10 and cylindrical portion 22 of upper shell 20 which form the circumferential wall portion of the housing. According to such a construction, gas can more smoothly flow in the inside of filter 90 and efficiency in use of filter 90 can be higher than in an example where filter 90 is arranged as being in contact with cylindrical portions 12 and 22.

A plurality of gas discharge openings 23 are provided in cylindrical portion 22 of upper shell 20 in a portion facing filter 90. The plurality of gas discharge openings 23 serve for guiding gas which has passed through filter 90 to the outside of the housing.

To an inner circumferential surface of cylindrical portion 22 of upper shell 20, a sealing tape 24 made of a metal as a sealing member is attached to close the plurality of gas discharge openings 23. An aluminum foil or the like having a tacky member applied to its one surface is suitably made use of as this sealing tape 24 and hermeticity of combustion chamber 60 is ensured by sealing tape 24.

In the vicinity of the end portion of combustion chamber 60 located on the side of bottom plate portion 11, lower supporting member 70 is arranged. Lower supporting member 70 is a member that positions and holds filter 90 by coming in contact with the inner circumferential surface of filter 90 located on the side of bottom plate portion 11.

Lower supporting member 70 has an annular shape and is arranged as substantially being applied to filter 90 and bottom plate portion 11 so as to cover a boundary portion between filter 90 and bottom plate portion 11. Thus, lower supporting member 70 is located between bottom plate portion 11 and gas generating agent 61 in the vicinity of the end portion of combustion chamber 60.

Lower supporting member 70 includes a base portion 71 in a shape of an annular plate applied to bottom plate portion 11 along the inner bottom surface of bottom plate portion 11, an abutment portion 72 which abuts on an inner circumferential surface of filter 90 close to bottom plate portion 11, and a cylindrical partition wall portion 73 erected from base portion 71 toward top plate portion 21. Abutment portion 72 is provided to extend from an outer edge of base portion 71 and partition wall portion 73 is provided to extend from an inner edge of base portion 71.

Lower supporting member 70 is made from a member which does not burst or melt even by combustion of enhancer agent 56 with activation of igniter 40. Lower supporting member 70 is formed, for example, by press-working a plate-shaped member made of metal, and suitably made of a member formed from a steel plate of common steel, special steel, or the like (such as a cold rolled steel plate or a stainless steel plate).

Tip end portion 54 of extension portion 53 of cup-shaped member 50 described above is arranged between bottom plate portion 11 and base portion 71 of lower supporting member 70 along the axial direction of the housing. Thus, tip end portion 54 is held as being sandwiched between bottom plate portion 11 and base portion 71 along the axial direction of the housing. According to the construction as such, cup-shaped member 50 is in such a state that tip end portion 54 of extension portion 53 is pressed toward bottom plate portion 11 by base portion 71 of lower supporting member 70 and fixed to bottom plate portion 11.

Upper supporting member 80 is arranged at the end portion of combustion chamber 60 located on the side of top plate portion 21. Upper supporting member 80 is a member that positions and holds filter 90 by coming in contact with the inner circumferential surface of filter 90 located on the side of top plate portion 21.

Upper supporting member 80 is substantially in a shape of a disc and is arranged as being applied to filter 90 and top plate portion 21 so as to cover the boundary portion between filter 90 and top plate portion 21. Thus, upper supporting member 80 is located between top plate portion 21 and gas generating agent 61 in the vicinity of the end portion of combustion chamber 60.

Upper supporting member 80 has a base portion 81 abutting on top plate portion 21 and an abutment portion 82 erected from a peripheral edge of base portion 81. Abutment portion 82 abuts on the inner circumferential surface of an axial end portion of filter 90 located on the side of top plate portion 21.

Upper supporting member 80 is made from a member which does not burst or melt even by combustion of enhancer agent 56 with activation of igniter 40. Similarly to lower supporting member 70, upper supporting member 80 is formed, for example, by press-working a plate-shaped member made of metal, and suitably made of a member formed from a steel plate of common steel, special steel, or the like (such as a cold rolled steel plate or a stainless steel plate).

In this upper supporting member 80, annular cushion material 85 is arranged to be in contact with gas generating agent 61 accommodated in combustion chamber 60. Cushion material 85 is thus located between top plate portion 21 and gas generating agent 61 in a portion of combustion chamber 60 on the side of top plate portion 21 and presses gas generating agent 61 toward bottom plate portion 11.

Cushion material 85 is provided for the purpose of preventing gas generating agent 61 made of a molding from being crushed by vibration or the like, and made of a member suitably formed of a molding of ceramic fibers, rock wool, or a foamed resin (such as foamed silicone, foamed polypropylene, or foamed polyethylene), or rubber represented by chloroprene and EPDM.

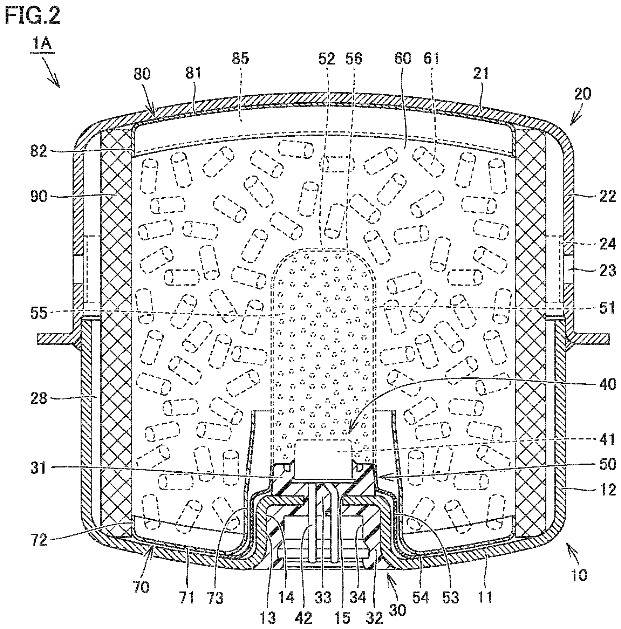

Fig. 2 is a schematic diagram showing a state at the time of activation, of the disc-type gas generator shown in Fig. 1. An operation of disc-type gas generator 1A in the present embodiment described above will now be described with reference to Fig. 2.

As shown in Fig. 2, when a vehicle on which disc-type gas generator 1A in the present embodiment is mounted collides, collision sensing means separately provided in the vehicle senses collision, and based thereon, igniter 40 is activated in response to power feed through a control unit separately provided in the vehicle. Enhancer agent 56 accommodated in enhancer chamber 55 is ignited to burn by flames produced as a result of activation of igniter 40, to thereby generate a large amount of thermal particles. Burning of this enhancer agent 56 bursts or melts cup-shaped member 50 and the thermal particles described above flow into combustion chamber 60.

The thermal particles which have flowed in ignite and burn gas generating agent 61 accommodated in combustion chamber 60 and a large amount of gas is produced. Gas produced in combustion chamber 60 passes through filter 90. At that time, heat is removed from gas through filter 90 and gas is cooled, slug contained in gas is removed by filter 90, and gas flows into gap 28.

As a pressure in the space in the housing increases, sealing tape 24 which has closed gas discharge opening 23 provided in upper shell 20 is cleaved and gas is discharged to the outside of the housing through gas discharge opening 23. Discharged gas is introduced in the air bag provided adjacent to disc-type gas generator 1A and it expands and develops the air bag.

In disc-type gas generator 1A according to the present embodiment, as described above, a highly resilient filter is employed as filter 90. Therefore, even when axial compressive force applied to filter 90 becomes weaker due to deformation of the housing to expand axially outward, filter 90 expands along the axial direction based on resilience thereof, and accordingly, the state of pressure contact thereof with top plate portion 21 and bottom plate portion 11 is maintained. Therefore, since filter 90 expands to follow axial deformation of the housing even at the time of activation of disc-type gas generator 1A, no gap is created between the housing and filter 90 and gas generated in combustion chamber 60 reliably passes through filter 90.

A filter that has an axial length expanded by at least 1.0 mm as compared with the state in which the filter is sandwiched between top plate portion 21 and bottom plate portion 11, when sandwiching between top plate portion 21 and bottom plate portion 11 is removed to apply no load, is employed as filter 90. The reason why such a filter 90 is employed is based on results in first and second verification tests which will be described later.

Use of filter 90 as above also achieves such an effect that compressive load necessary for sandwiching the filter between top plate portion 21 and bottom plate portion 11 can be low in assembly of filter 90 to the housing. Therefore, disc-type gas generator 1A according to the present embodiment can achieve also an effect of improvement in ease of assembly in manufacturing.

In the present embodiment, lower supporting member 70 and upper supporting member 80 are provided in combustion chamber 60. Lower supporting member 70 and upper supporting member 80 are provided to position and hold filter 90. Lower supporting member 70 is provided to hold cup-shaped member 50 by sandwiching tip end portion 54 of cup-shaped member 50 between lower supporting member 70 and bottom plate portion 11.

In the general disc-type gas generator, the lower supporting member and the upper supporting member perform not only the function described above but also a function as the leakage prevention member that prevents, by covering a gap that may be created between the housing and the filter at the time of activation, gas from flowing out through the gap. In disc-type gas generator 1A according to the present embodiment, however, lower supporting member 70 and upper supporting member 80 do not perform such a function.

Specifically, disc-type gas generator 1A according to the present embodiment is constructed such that highly resilient filter 90 described above prevents creation of the gap described above without depending on lower supporting member 70 and upper supporting member 80 and gas generated in combustion chamber 60 thus reliably passes through filter 90.

In order to have lower supporting member 70 and upper supporting member 80 function as the leakage prevention member described above, the axial lengths thereof should considerably be long such that respective abutment portions 72 and 82 of lower supporting member 70 and upper supporting member 80 reliably abut on the inner circumferential surface of filter 90. In disc-type gas generator 1A according to the present embodiment, however, the lower supporting member and the upper supporting member do not perform the function as the leakage prevention member, and hence the axial lengths of abutment portions 72 and 82 can sufficiently be short.

Therefore, an area of portions of the inner circumferential surface of filter 90 covered with abutment portions 72 and 82 can be small. Consequently, gas generated in combustion chamber 60 passes through a larger portion of filter 90 and consequently efficiency in use of the filter is significantly enhanced. Decrease in axial lengths of respective abutment portions 72 and 82 of lower supporting member 70 and upper supporting member 80 can also lead to such a side benefit as reduction in material cost and reduction in weight of disc-type gas generator 1A.

As described above, with disc-type gas generator 1A according to the present embodiment, a disc-type gas generator in which gas generated in the combustion chamber can reliably pass through the filter and efficiency in use of the filter is hence enhanced can be obtained.

### (First Verification Test)

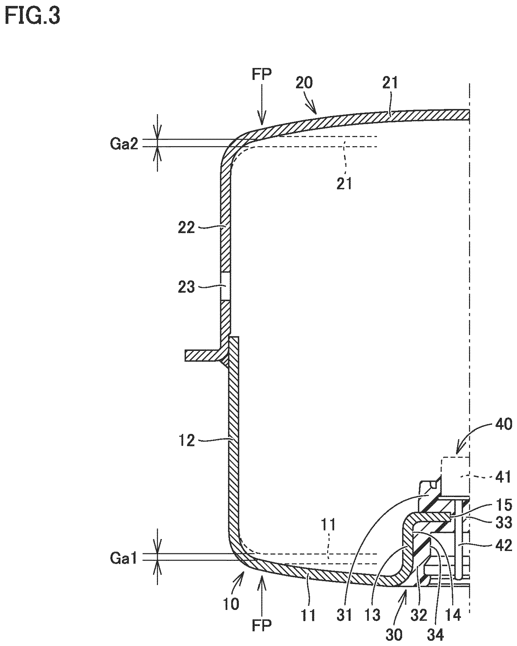

In a first verification test, an amount of resilience of a filter necessary for maintaining a state of pressure contact of the filter with the housing at the time of activation of a standard disc-type gas generator was verified. The standard disc-type gas generator refers to a disc-type gas generator in which an amount of gas generated at the time of activation is not less than 1.0 mol and not more than 3.0 mol. Fig. 3 is a schematic diagram for illustrating the first verification test. For the sake of facilitated understanding, Fig. 3 shows only lower shell 10 and upper shell 20 that form the housing, holding portion 30, and igniter 40.

In verification, a disc-type gas generator in which an amount of gas generated at the time of activation was 1.3 mol and a disc-type gas generator in which an amount of gas generated at the time of activation was 3.0 mol were prepared. Each of the disc-type gas generators was activated, and thereafter an amount of axial deformation of the housing in a portion of abutment on the filter (a portion shown with a reference FP in the figure) was measured.

The housing of the disc-type gas generator in which the amount of gas generated at the time of activation was 1.3 mol had an outer diameter of 58 mm, an axial length of 38 mm, and a thickness in bottom plate portion 11 and top plate portion 21 of 1.5 mm. The housing of the disc-type gas generator in which an amount of gas generated at the time of activation was 3.0 mol had an outer diameter of 70 mm, an axial length of 60 mm, and a thickness in bottom plate portion 11 and top plate portion 21 of 1.5 mm.

As shown in Fig. 3, at the time of activation of the disc-type gas generator, with deformation of the housing due to increase in pressure in a space in the inside of the housing, bottom plate portion 11 of lower shell 10 and top plate portion 21 of upper shell 20 were displaced from positions before activation shown with dashed lines in the figure to positions shown with solid lines in the figure. The amount of axial deformation of the housing in portions FP of abutment on the filter described above corresponds to the sum of an amount of displacement Gal of bottom plate portion 11 and an amount of displacement Ga2 of top plate portion 21.

When each of the disc-type gas generators described above was activated, the amount of axial deformation of the housing in portions FP of abutment on the filter was 0.8 mm in the disc-type gas generator in which the amount of gas generated at the time of activation was 1.3 mol and 1.0 mm in the disc-type gas generator in which the amount of gas generated at the time of activation was 3.0 mol.

Based on results above, by employing as filter 90, the filter that had the axial length expanded by at least 1.0 mm as compared with the state in which the filter was sandwiched between top plate portion 21 and bottom plate portion 11, when sandwiching between top plate portion 21 and bottom plate portion 11 was removed to apply no load, filter 90 expanded to follow axial deformation of the housing even at the time of activation of the gas generator and creation of the gap between the housing and filter 90 could effectively be suppressed.

### (Second Verification Test)

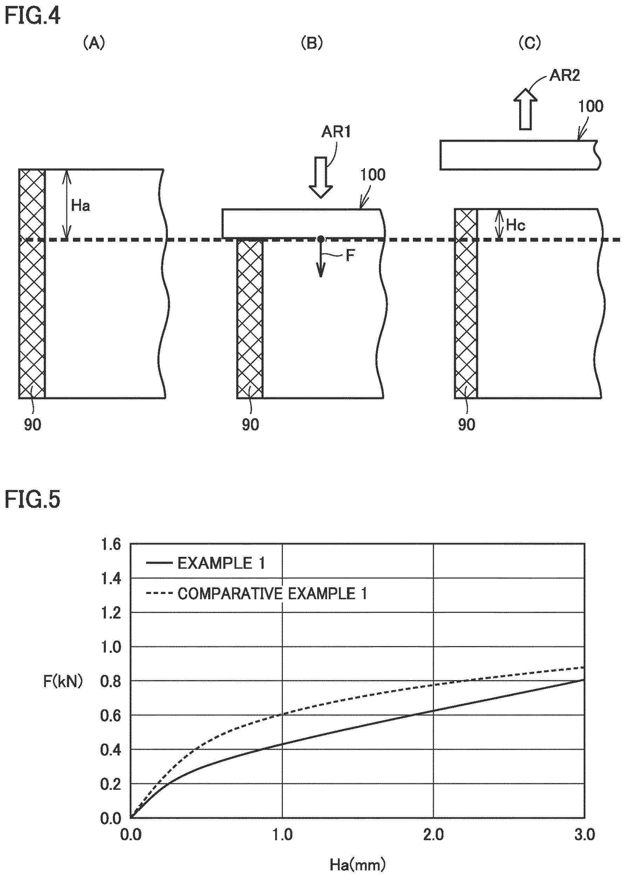

In a second verification test, various filters were prepared. Whether or not the amount of resilience derived from the results in the first verification test described above was actually satisfied when those filters were each assembled to the standard disc-type gas generator was verified. Fig. 4 is a schematic diagram showing a test procedure in the second verification test. Figs. 5 to 8 show graphs or tables of results in the second verification test.

In the second verification test, a highly resilient filter (that is, a filter high in resilience in the axial direction) expected to be assembled to the disc-type gas generator in which the amount of gas generated at the time of activation was 1.3 mol was prepared as Example 1, and a highly resilient filter expected to be assembled to the disc-type gas generator in which the amount of gas generated at the time of activation was 3.0 mol was prepared as Example 2. Furthermore, in the second verification test, a filter low in resilience (that is, a filter poor in resilience in the axial direction) expected to be assembled to the disc-type gas generator in which the amount of gas generated at the time of activation was 1.3 mol was prepared as Comparative Example 1, and a filter low in resilience expected to be assembled to the disc-type gas generator in which the amount of gas generated at the time of activation was 3.0 mol was prepared as Comparative Example 2.

The filters according to Example 1 and Comparative Example 1 each had an outer diameter of 50 mm, an axial length of 37 mm, and a thickness of 3.5 mm. The filters according to Example 2 and Comparative Example 2 each had an outer diameter of 60 mm, an axial length of 60 mm, and a thickness of 4.5 mm.

As shown in Fig. 4, in the second verification test, filters 90 according to Examples 1 and 2 and Comparative Examples 1 and 2 were compressed by a prescribed amount along the axial direction, and thereafter compression applied to filters 90 was removed. At that time, relation between a compressive load F applied to filter 90 and an amount of compression Ha along the axial direction of the filter and relation between amount of compression Ha along the axial direction of filter 90 and an amount of resilience Hc along the axial direction of filter 90 were measured.

Specifically, from an unloaded state shown in Fig. 4 (A), a compression tester 100 was used for filter 90 to compress filter 90 in a direction shown with an arrow AR1 in the figure as shown in Fig. 4 (B), and relation between amount of compression Ha along the axial direction of the filter and compressive load F applied to filter 90 at that time was measured. Thereafter, from the state in which compressive load F was applied to filter 90 with the use of compression tester 100 as shown in Fig. 4 (B), compression tester 100 was moved backward in a direction shown with an arrow AR2 in the figure as shown in Fig. 4 (C) to remove compression onto filter 90 for unloading. Filter 90 was thus allowed to expand (that is, to recover the original state) along the axial direction and relation between amount of compression Ha along the axial direction of filter 90 and amount of resilience Hc along the axial direction of filter 90 at that time was measured.

Fig. 5 shows a graph of relation between amount of compression Ha and compressive load F of the filter according to Example 1 and relation between amount of compression Ha and compressive load F of the filter according to Comparative Example 1.

Referring to Fig. 5, the filter according to Example 1 and the filter according to Comparative Example 1 were compared with each other. In a range where amount of compression Ha was approximately not greater than 0.2 mm, there was not a great difference in compressive load F. When amount of compression Ha exceeded approximately 0.2 mm, at equivalent amount of compression Ha, compressive load F of the filter according to Example 1 was lower than compressive load F of the filter according to Comparative Example 1, and such a tendency continued until amount of compression Ha attained at least to 3.0 mm. The tendency was most noticeable in a range of amount of compression Ha from approximately 0.5 mm to approximately 2.0 mm, and compressive load F of the filter according to Example 1 at that time was lower by approximately 0.2 kN than compressive load F of the filter according to Comparative Example 1.

Normally, amount of compression Ha of the filter at the time of assembly of the filter to the disc-type gas generator in which the amount of gas generated at the time of activation was 1.3 mol was approximately 2.0 mm. Therefore, it can be found that, when the filter according to Example 1 was used for the disc-type gas generator, the filter could be assembled to the housing with lower compressive load F than when the filter according to Comparative Example 1 was used for the disc-type gas generator.

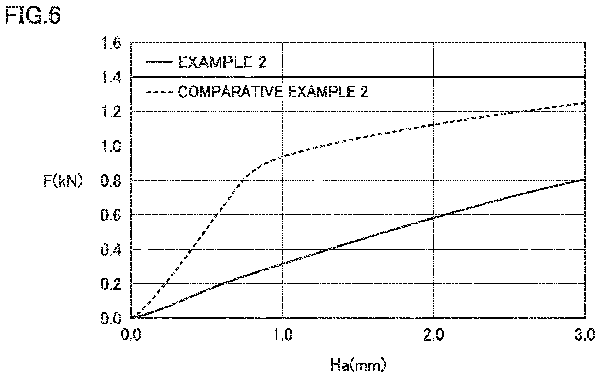

Fig. 6 shows a graph of relation between amount of compression Ha and compressive load F of the filter according to Example 2 and relation between amount of compression Ha and compressive load F of the filter according to Comparative Example 2.

Referring to Fig. 6, the filter according to Example 2 and the filter according to Comparative Example 2 were compared with each other. Throughout a range from a point where amount of compression Ha exceeded 0.0 mm to at least 3.0 mm, at equivalent amount of compression Ha, compressive load F of the filter according to Example 2 was lower than compressive load F of the filter according to Comparative Example 2. This tendency was most noticeable in a range of amounts of compression Ha from approximately 0.5 mm to approximately 3.0 mm, and compressive load F of the filter according to Example 2 was lower by approximately 0.4 kN to approximately 0.6 kN than compressive load F of the filter according to Comparative Example 2.

Normally, amount of compression Ha of the filter at the time of assembly of the filter to the disc-type gas generator in which the amount of gas generated at the time of activation was 3.0 mol was approximately 3.0 mm. Therefore, it can be found that, when the filter according to Example 2 was used for the disc-type gas generator, the filter could be assembled to the housing with lower compressive load F than when the filter according to Comparative Example 2 was used for the disc-type gas generator.

Based on the results above, it can also experimentally be confirmed that disc-type gas generator 1A according to the first embodiment described above achieved an effect of improvement in ease of assembly in assembly of the filter.

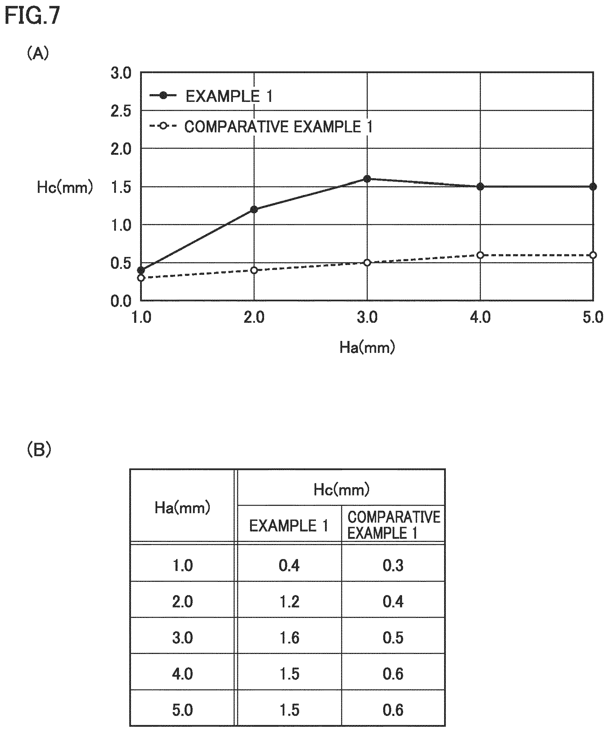

Fig. 7 (A) shows a graph of relation between amount of compression Ha and amount of resilience Hc of the filter according to Example 1 and relation between amount of compression Ha and amount of resilience Hc of the filter according to Comparative Example 1, and Fig. 7 (B) shows a table thereof.

Referring to Fig. 7 (A) and Fig. 7 (B), the filter according to Example 1 and the filter according to Comparative Example 1 were compared with each other. When amount of compression Ha was 1.0 mm, there was no great difference between amounts of resilience Hc. When amounts of compression Ha was 2.0 mm, 3.0 mm, 4.0 mm, and 5.0 mm, however, a great difference was produced between amounts of resilience Hc.

Specifically, when amount of compression Ha was 1.0 mm, amount of resilience Hc of the filter according to Example 1 was 0.4 mm and amount of resilience Hc of the filter according to Comparative Example 1 was 0.3 mm. When amounts of compression Ha were 2.0 mm, 3.0 mm, 4.0 mm, and 5.0 mm, amount of resilience Hc of the filter according to Example 1 was larger than 1.0 mm in each case, whereas amount of resilience Hc of the filter according to Comparative Example 1 was smaller than 1.0 mm in each case. In the case of the filter according to Example 1, amount of resilience Hc was largest when amount of compression Ha was 3.0 mm, and amount of resilience Hc at that time was 1.6 mm. In the case of the filter according to Example 1, amount of resilience Hc was 1.2 mm when amount of compression Ha was 2.0 mm.

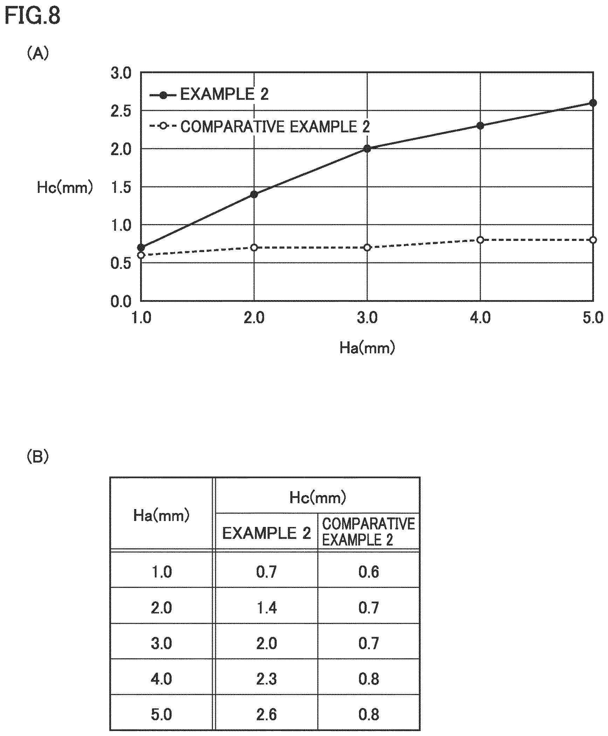

Fig. 8 (A) shows a graph of relation between amount of compression Ha and amount of resilience Hc of the filter according to Example 2 and relation between amount of compression Ha and amount of resilience Hc of the filter according to Comparative Example 2, and Fig. 8 (B) shows a table thereof.

Referring to Fig. 8 (A) and Fig. 8 (B), the filter according to Example 2 and the filter according to Comparative Example 2 were compared with each other. When amount of compression Ha was 1.0 mm, there was no great difference between amounts of resilience Hc. When amounts of compression Ha were 2.0 mm, 3.0 mm, 4.0 mm, and 5.0 mm, a great difference was produced between amounts of resilience Hc.

Specifically, when amount of compression Ha was 1.0 mm, amount of resilience Hc of the filter according to Example 2 was 0.7 mm and amount of resilience Hc of the filter according to Comparative Example 2 was 0.6 mm. When amounts of compression Ha were 2.0 mm, 3.0 mm, 4.0 mm, and 5.0 mm, amount of resilience Hc of the filter according to Example 2 was larger than 1.0 mm in each case, whereas amount of resilience Hc of the filter according to Comparative Example 2 was smaller than 1.0 mm in each case. In the case of the filter according to Example 2, amount of resilience Hc was largest when amount of compression Ha was 5.0 mm in the range of measurement, and amount of resilience Hc at that time was 2.6 mm. In the case of the filter according to Example 2, amount of resilience Hc was 2.0 mm when amount of compression Ha was 3.0 mm.

Based on the results above, it is understood that, when the filter according to Example 1 was assembled to the disc-type gas generator in which the amount of gas generated at the time of activation was 1.3 mol and the filter according to Example 1 was assembled to the disc-type gas generator in which the amount of gas generated at the time of activation was 3.0 mol, the filter actually satisfied the amount of resilience derived from the results in the first verification test described above. Therefore, it can also experimentally be confirmed that, with disc-type gas generator 1A according to the first embodiment, a disc-type gas generator in which gas generated in the combustion chamber can reliably pass through the filter and efficiency in use of the filter is hence enhanced can be obtained.

In the first and second verification tests described above, the disc-type gas generator in which the amount of gas generated at the time of activation was 1.3 mol and the disc-type gas generator in which the amount of gas generated at the time of activation was 3.0 mol were prepared and verification thereof was conducted. It is estimated that the effect described in the first embodiment above is achieved also by employing a highly resilient filter (more specifically, a filter that has an axial length expanded by at least 1.0 mm when sandwiching between the top plate portion and the bottom plate portion is removed to apply no load) as the filter to be assembled to the disc-type gas generator in which the amount of gas generated at the time of activation is 1.0 mol encompassed in the standard disc-type gas generator described above.

As is understood from the results in the first verification test, the amount of axial deformation of the housing in the portion of abutment on the filter at the time of activation of the disc-type gas generator in which the amount of generated gas was 1.3 mol was 0.8 mm. In the disc-type gas generator smaller in amount of gas generated at the time of activation than the former disc-type gas generator, on the other hand, it is expected that the amount of axial deformation of the housing can be suppressed to 0.8 mm or less. Therefore, it is considered that, with the use of the highly resilient filter described above, the state of pressure contact of the filter with the top plate portion and the bottom plate portion is maintained owing to resilience thereof even at the time of activation of the disc-type gas generator.

### (Operations of Disc-Type Gas Generator in Which Filter According to Example or Comparative Example Is Assembled)

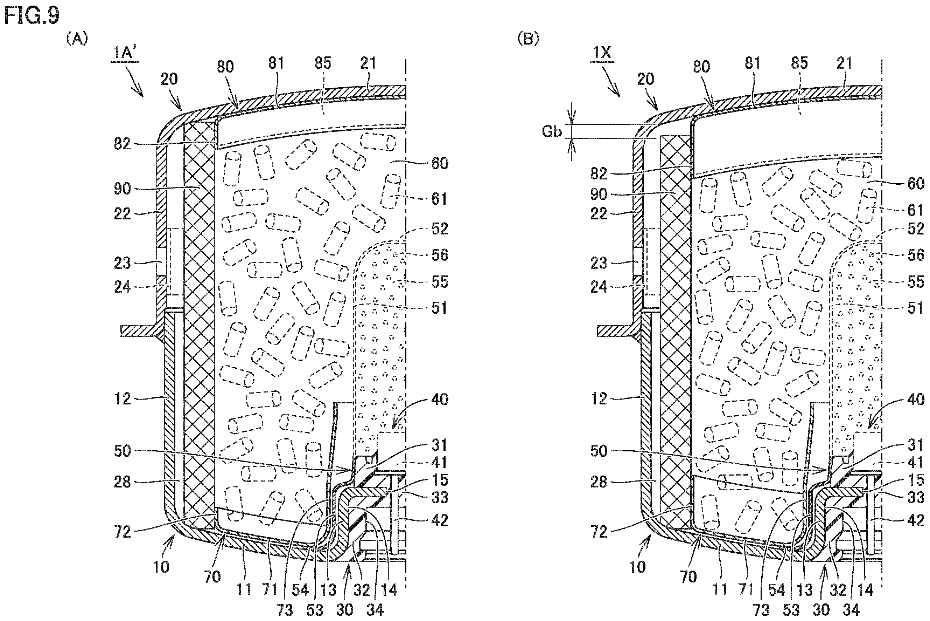

Operations in a case where each of the filters according to Examples 1 and 2 and Comparative Examples 1 and 2 was assembled to the disc-type gas generator will be described below. Fig. 9 (A) is a schematic diagram showing operations assumed when the disc-type gas generator in which the filter according to Example 1 or 2 is assembled is activated, and Fig. 9 (B) is a schematic diagram showing operations assumed when the disc-type gas generator in which the filter according to Comparative Example 1 or 2 is assembled is activated.

As shown in Fig. 9 (A), in a disc-type gas generator 1A' in which the highly resilient filter (that is, the filter according to Example 1 or 2) is assembled, filter 90 expands to follow axial deformation of the housing even at the time of activation thereof. Therefore, no gap is created between top plate portion 21 and filter 90 and between bottom plate portion 11 and filter 90. Therefore, gas generated in combustion chamber 60 reliably passes through filter 90.

As shown in Fig. 9 (B), on the other hand, in a disc-type gas generator 1X in which the filter low in resilience (that is, the filter according to Comparative Example 1 or 2) is assembled, expansion of filter 90 cannot sufficiently follow axial deformation of the housing at the time of activation. Therefore, a gap Gb is created between both or one of top plate portion 21 and bottom plate portion 11 and filter 90 (the figure assumes and illustrates an example where a gap is created between top plate portion 21 and filter 90).

Based on the results in the first and second verification tests described above, gap Gb was 0.4 mm in the disc-type gas generator in which the amount of gas generated at the time of activation was 1.3 mol and 0.3 mm in the disc-type gas generator in which the amount of gas generated at the time of activation was 3.0 mol. Therefore, when no measures are taken in disc-type gas generator 1X, some of gas generated in the combustion chamber flows out through gap Gb into a gap portion 28 without passing through filter 90.

Therefore, in disc-type gas generator 1X, lower supporting member 70 and upper supporting member 80 should function as the leakage prevention members as described above to prevent leakage of gas through gap Gb. In that case, the axial lengths of respective abutment portions 72 and 82 of lower supporting member 70 and upper supporting member 80 should considerably be long.

In this connection, in disc-type gas generator 1A' including the highly resilient filter, lower supporting member 70 and upper supporting member 80 do not have to perform such a function as the leakage prevention member, and hence the axial lengths of abutment portions 72 and 82 can sufficiently be short.

Therefore, in disc-type gas generator 1A' including the highly resilient filter, an area of portions of the inner circumferential surface of filter 90 covered with abutment portions 72 and 82 can be small and hence gas generated in combustion chamber 60 passes through a larger portion of filter 90. Consequently, efficiency in use of filter 90 can significantly be enhanced and reduction in material cost or weight can be achieved.

### (Second Embodiment)

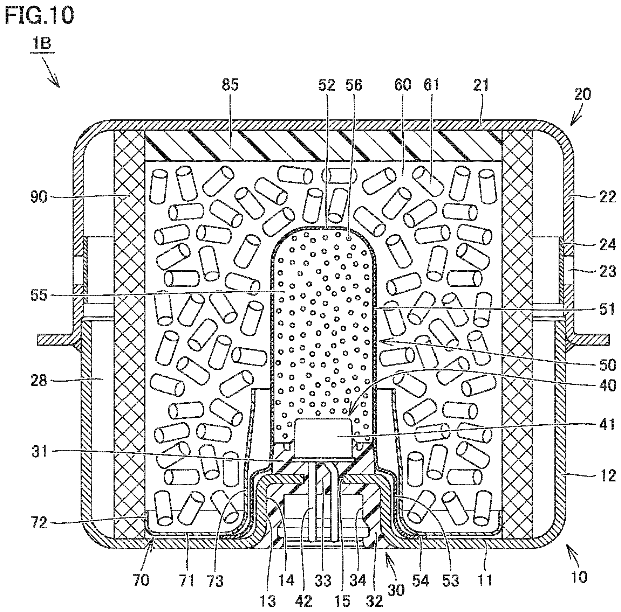

Fig. 10 is a schematic diagram of a disc-type gas generator according to a second embodiment. A disc-type gas generator 1B in the present embodiment will be described below with reference to Fig. 10.

As shown in Fig. 10, disc-type gas generator 1B in the present embodiment is different from disc-type gas generator 1A in the first embodiment described above only in construction thereof that upper supporting member 80 is not provided in combustion chamber 60.

Specifically, in the first embodiment described above, lower supporting member 70 and upper supporting member 80 provided in combustion chamber 60 position and hold filter 90, whereas in the present embodiment, only lower supporting member 70 provided in combustion chamber 60 positions and holds filter 90.

Therefore, such a construction can also achieve an effect similar to the effect described in the first embodiment above. Furthermore, with disc-type gas generator 1B according to the present embodiment, upper supporting member 80 does not have to be provided. Therefore, the number of components can be reduced and further reduction in weight can be achieved.

### (Other Forms)

In the first embodiment above, the disc-type gas generator in which both of a lower support portion and the upper supporting member are provided in the combustion chamber is illustrated and described, and in the second embodiment above, the disc-type gas generator in which the lower supporting member is provided in the combustion chamber but the upper supporting member is not provided in the combustion chamber is illustrated and described. The present invention may be applied to a disc-type gas generator in which the upper supporting member is provided in the combustion chamber but the lower supporting member is not provided in the combustion chamber or to a disc-type gas generator in which neither of an upper support portion and the lower supporting member is provided in the combustion chamber.

The shape, the construction, the size, the number, the material, and the like of portions disclosed in the first and second embodiments described above can variously be modified without departing from the gist of the present invention.

The embodiments disclosed herein are thus illustrative and non-restrictive in every respect. The technical scope of the present invention is delimited by the terms of the claims and includes any modifications within the scope and meaning equivalent to the description in the terms of the claims.

### REFERENCE SIGNS LIST

1A, 1A', 1B, 1X disc-type gas generator; 10 lower shell; 11 bottom plate portion; 12 cylindrical portion; 13 protruding cylindrical portion; 14 depression portion; 15 opening; 20 upper shell; 21 top plate portion; 22 cylindrical portion; 23 gas discharge opening; 24 sealing tape; 28 gap; 30 holding portion; 31 inner cover portion; 32 outer cover portion; 33 coupling portion; 34 female connector portion; 40 igniter; 41 ignition portion; 42 terminal pin; 50 cup-shaped member; 51 sidewall portion; 52 top wall portion; 53 extension portion; 54 tip end portion; 55 enhancer chamber; 56 enhancer agent; 60 combustion chamber; 61 gas generating agent; 70 lower supporting member; 71 base portion; 72 abutment portion; 73 partition wall portion; 80 upper supporting member; 81 base portion; 82 abutment portion; 85 cushion material; 90 filter; 100 compression tester

## Claims

1. A gas generator comprising:
a housing including a circumferential wall portion, a top plate portion, and a bottom plate portion, one axial end of the circumferential wall portion being closed by the top plate portion, the other axial end of the circumferential wall portion being closed by the bottom plate portion;
a gas generating agent arranged in inside of the housing, the gas generating agent generating gas by being burnt;
an igniter assembled to the housing, the igniter burning the gas generating agent; and
a hollow cylindrical filter disposed in the inside of the housing, the filter surrounding, in a radial direction of the circumferential wall portion, a combustion chamber where the gas generating agent is accommodated, wherein
the circumferential wall portion is provided with a gas discharge opening for discharge of gas generated in the combustion chamber to outside,
the filter is made of a wound body or a braided body of metal wire rods,
the filter is held by the housing in an axially compressed state by being sandwiched between the top plate portion and the bottom plate portion, and
when sandwiching between the top plate portion and the bottom plate portion is removed to apply no load, the filter has an axial length expanded by at least 1.0 mm as compared with a state in which the filter is sandwiched between the top plate portion and the bottom plate portion.

2. The gas generator according to claim 1, wherein
an amount of gas generated by combustion of the gas generating agent is not less than 1.0 mol and not more than 3.0 mol.

3. The gas generator according to claim 1 or 2, further comprising:
a lower supporting member that covers a boundary portion between the top plate portion and the filter by abutting on a part of the top plate portion that defines the combustion chamber and an end of an inner circumferential surface of the filter on a side of the top plate portion; and
an upper supporting member that covers a boundary portion between the bottom plate portion and the filter by abutting on a part of the bottom plate portion that defines the combustion chamber and an end of the inner circumferential surface of the filter on a side of the bottom plate portion.
